# EUROPÄISCHE PATENTSCHRIFT

(11) **EP 0 733 597 B1**
(45) Veröffentlichungstag und Bekanntmachung des Hinweises auf die Patenterteilung: **15.09.1999**
(21) Anmeldenummer: 96103924.5
(22) Anmeldetag: 13.03.1996
(51) Int. Cl.: C03B 9/353, C03B 9/16

(54) **Betätigungseinrichtung für das Öffnen und Schliessen von Formen, insbesondere von Vorformen, einer IS-Maschine**
Apparatus for opening and closing moulds, in particular blank moulds of an I.S. machine
Appareil pour ouvrir et fermer des moules, en particulier des moules ébaucheurs d'une machine I.S.

(30) Priorität: 21.03.1995 DE 19510128
(43) Veröffentlichungstag der Anmeldung: 25.09.1996
(73) Patentinhaber: GPS GLASPRODUKTIONS-SERVICE GMBH, 45329 Essen (DE)
(72) Erfinder: Wolter, Joachim, D-45966 Gladbeck (DE); Krämer, Kurt, D-45329 Essen (DE)
(74) Vertreter: Spalthoff, Adolf, Dipl.-Ing.

(56) Entgegenhaltungen:
- GB-A- 2 140 407
- US-A- 1 911 119
- US-A- 2 538 822
- US-A- 4 375 979
- US-A- 4 449 996

## Beschreibung

Die Erfindung bezieht sich auf eine Betätigungseinrichtung für das Öffnen und Schließen von Formen, insbesondere von Vorformen, einer IS-Maschine, mit einem zwei Schwenkhebel aufweisenden Doppelhebel, an dem Formenhalter der IS-Maschine angeordnet sind, einem Aufnahmebolzen, um den herum die Schwenkhebel des Doppelhebels zum Öffnen und Schließen der Formen schwenkbar sind, und einer Zylinder-Kolben-Einheit, mittels deren Kolbenhub die Schwenkhebel des Doppelhebels bewegbar sind.

Eine IS-Maschine, bei der eine derartige Betätigungseinrichtung zum Einsatz kommt, besteht normalerweise aus mehrern Stationen. Jeder dieser Stationen ist ein sog. Stationskasten zugeordnet. Am Boden dieses Stationskastens ist je eine Zylinder-Kolben-Einheit zur Betätigung eines Öffnungs- bzw. Schließmechanismus für die Formen vorgesehen. Die Hubbewegung einer Kolbenstange der Zylinder-Kolben-Einheit wird über ein Hebelgestänge auf Drehwellen übertragen, welche sich durch den Stationskasten in Vertikalrichtung aufwärts zu einer Formkonsole erstrecken. Mittels der zum Öffnungs- und Schließmechanismus gehörenden Formkonsole wird die von der Kolbenstange der Zylinder-Kolben-Einheit über die Drehwellen übertragene Bewegung über den die beiden Schwenkhebel aufweisenden Doppelhebel auf den Formenhalter übertragen. In den Formenhalter sind die Formen der IS-Maschine eingehängt (siehe z.B. GB-A-2 140 407).

Der vorstehend beschriebene Öffnungs- und Schließmechanismus beinhaltet ein technisch-konstruktiv sehr aufwendiges Gestänge, welches entsprechend auch nicht unbeträchtlichem Verschleiß unterworfen ist und darüber hinaus einen großen Platzbedarf sowie eine regelmäßige Wartung erfordert. Des weiteren muß das Gestänge so ausgebildet sein, daß es die beim Schließen einer Form auftretenden Kräfte übernehmen kann. Insbesondere dann, wenn es sich bei der Form um eine Vorform handelt, und wenn in diese Vorform ein zu großer Glastropfen eingegeben wird, können die zum Schließen bzw. zum Geschlossenhalten der Vorform erforderlichen Kräfte bei der Bewegung des Plungers innerhalb der Vorform sehr beträchtlich sein.

Der Erfindung liegt die Aufgabe zugrunde, die gattungsgemäße Betätigungseinrichtung für das Öffnen und Schließen von Formen, insbesondere von Vorformen, einer IS-Maschine derart weiterzubilden, daß der zwischen der Kolbenstange der Zylinder-Kolben-Einheit und dem die beiden Schwenkhebel aufweisenden Doppelhebel angeordnete Öffnungs- und Schließmechanismus vereinfacht und eher dazu geeignet ist, die beim Schließen bzw. bei Geschlossenhalten der Formen, insbesondere der Vorformen, auftretenden Kräfte aufzunehmen.

Diese Aufgabe wird erfindungsgemäß dadurch gelöst, daß die Zylinder-Kolben-Einheit, mittels deren Kolbenhub die Schwenkhebel des Doppelhebels bewegbar sind, einerseits fest am Aufnahmebolzen angebracht und andererseits mittels einer Stellstange und eines Doppelkniehebels unmittelbar mit den Schwenkhebeln des Doppelhebels verbunden ist. Die feste Anordnung der Zylinder-Kolben-Einheit am Aufnahmebolzen der Betätigungseinrichtung erlaubt eine konstruktiv wenig aufwendige und dennoch hochgradig zuverlässige und exakte Umsetzung der Linearbewegung der Kolbenstange der Zylinder-Kolben-Einheit in die Schwenkbewegung der beiden Schwenkhebel des Doppelhebels, an dem die Formenhalter der IS-Maschine vorgesehen sind. Drehwellen, wie sie im Falle des Öffnungs- und Schließmechanismus der eingangs geschilderten herkömmlichen Betätigungseinrichtung erforderlich sind, sind bei der erfindungsgemäßen Betätigungseinrichtung nicht vorhanden. Der für die Unterbringung der Drehwellen benötigte Raum kann somit für eine Verbesserung der Kühlung der betreffenden Station der IS-Maschine genutzt werden, wodurch sich nicht unerhebliche kapazitive Vorteile ergeben.

Zweckmäßigerweise wird das stationäre Bauteil der Zylinder-Kolben-Einheit, nämlich ihr Zylinder, fest am Aufnahmebolzen, bei dem es sich ebenfalls um ein stationäres und festes Bauteil handelt, angebracht.

Demgemäß ist die Zylinder-Kolben-Einheit vorteilhaft am freien Ende ihrer linear bewegbaren Kolbenstange mit dem einen Ende der Stellstange verbunden.

Sofern die Zylinder-Kolben-Einheit am oberen Ende des Aufnahmebolzens angeordnet ist, wird der im vertikal unteren Bereich der Form bzw. der Formen zur Verfügung stehende Raum, der normalerweise für geeignete Kühlmaßnahmen nutzbar ist, weiter vergrößert.

Um in jedem Fall ein seitliches Ausweichen der Stellstange an ihrem zylinder-kolben-fernen Ende zu verhindern, ist es vorteilhaft, wenn die Stellstange dort eine Rolle aufweist, die in einer maschinenseitigen Gleitbahn in Richtung des Kolbenhubs der Zylinder-Kolben-Einheit geradlinig geführt ist.

Eine konstruktiv-technisch wenig aufwendige und dennoch zuverlässige, zur Stellstange verschwenkbare Anlenkung und zueinander bewegbare Anordnung der beiden Arme des Doppelkniehebels ergibt sich, wenn die Stellstange Lagerbohrungen in stellstangenseitigen Endabschnitten der beiden in Vertikalrichtung übereinander angeordneten Arme des Doppelkniehebels durchragt. So kann in einfacher Weise die hin- und hergehende Linearbewegung des kolbenstangenfernen Endes der Stellstange in eine zueinander weg- und aufeinander zugerichtete Schwenkbewegung der beiden Arme des Doppelkniehebels umgesetzt werden.

Wenn die stellstangenfernen Enden der beiden Arme des Doppelkniehebels verschwenkbar mit den formhalterfernen Enden der beiden Schwenkhebel des Doppelhebels verbunden sind, kann die voneinander weg und aufeinander zu erfolgende Verschwenkung der beiden Arme des Doppelkniehebels in einfacher Weise in eine die Formen öffnende bzw. schließende Bewegung der beiden Schwenkhebel des Doppelhebels umgesetzt werden.

Eine weitgehende Entlastung der Zylinder-Kolben-Einheit von denjenigen Kräften, die auftreten, wenn der Pegel in den innerhalb der Vorform befindlichen Glastropfen einfährt, wird erreicht, wenn die Stellstange mittels einer Blockiereinrichtung in ihrer dem der geschlossenen Stellung der Formen zugeordneten Todpunkt des Kolbenhubs entsprechenden Endstellung verriegelbar ist. Die die Stellstange betätigende Zylinder-Kolben-Einheit muß demgemäß ausschließlich für die Öffnungs- und die Schließbewegung der Formen ausgelegt werden; das heißt, es müssen von dieser Zylinder-Kolben-Einheit lediglich vergleichsweise geringe Kräfte aufgenommen werden.

In technisch-konstruktiv einfacher Weise läßt sich die Blockiereinrichtung ausgestalten, wenn sie einen Keil aufweist, der zwischen einer in die maschinenseitige Gleitbahn vorstehenden und einer aus der maschinenseitigen Gleitbahn zurückgezogenen Position verstellbar ist.

Wenn die am kolbenstangenfernen Ende der Stellstange angeordnete Rolle im aufnahmebolzenfernen Endabschnitt der Gleitbahn sich befindet, d.h., wenn die Formen geschlossen sind, wird der Keil so in die maschinenseitige Gleitbahn eingeführt, daß er die am gleitbahnseitigen Ende der Stellstange angeordnete Rolle im aufnahmebolzenfernen Endabschnitt der Gleitbahn verriegelt. Mittels dieser Verriegelung werden die an den Formen bei der Hebelbewegung auftretenden Kräfte abgeleitet. Eine nennenswerte Übertragung dieser Kräfte auf die Kolbenstange und damit auf die Zylinder-Kolben-Einheit findet nicht statt.

In einfacher Weise läßt sich die Verstellung des Keils mittels einer zweiten Zylinder-Kolben-Einheit bewerkstelligen, deren Hubrichtung senkrecht zur Längsrichtung der maschinenseitigen Gleitbahn, in der die stellstangenseitige Rolle vorgesehen ist, angeordnet ist.

Im folgenden wird die Erfindung an Hand einer Ausführungsform unter Bezugnahme auf die Zeichnung näher erläutert.

Es zeigen:
- Figur 1: eine teilweise geschnittene Seitenansicht eines eine erfindungsgemäße Betätigungseinrichtung aufweisenden Teilabschnitts einer Station einer IS-Maschine;
- Figur 2: eine Oberansicht des in Figur 1 dargestellten Teilabschnitts; und
- Figur 3: eine Oberansicht eines Aufnahmebolzens sowie von um den Aufnahmebolzen verschwenkbar angeordneten Schwenkhebeln eines Doppelhebels.

Eine erfindungsgemäße Betätigungseinrichtung für das Öffnen und Schließen von Formen, insbesondere von Vorformen, einer IS-Maschine dient dazu, Formenhalter 1, 2, an denen die Formen aufgehängt sind, aus einer die Formen geschlossen haltenden in eine die Formen öffnende Position zu versetzen.

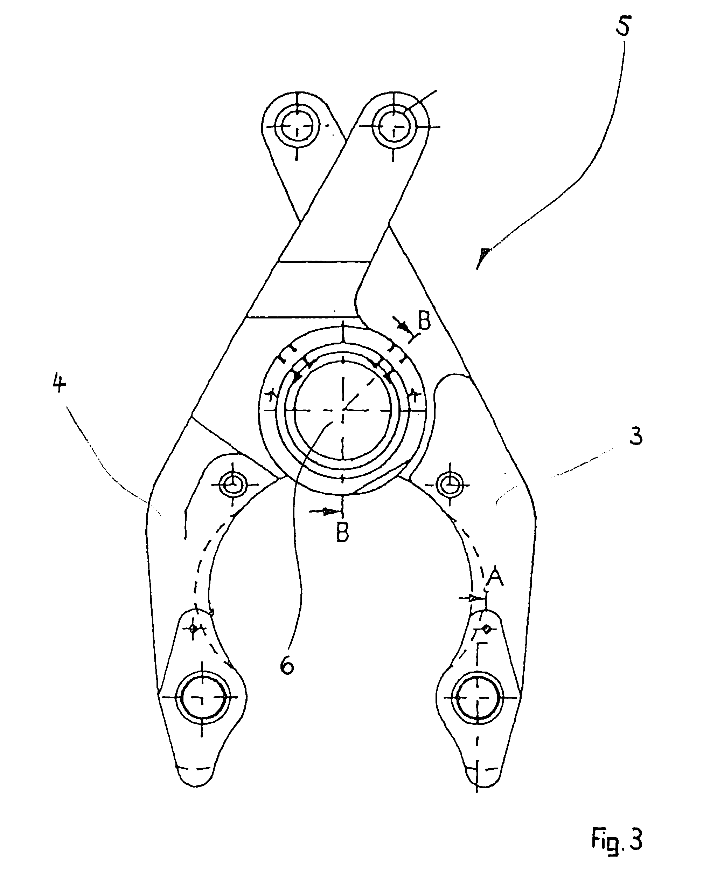

Die Formenhalter 1, 2 sind an zwei Schwenkhebeln 3, 4 eines insbesondere in Figur 3 dargestellten Doppelhebels 5 gelagert. Die beiden Schwenkhebel 3, 4 des Doppelhebels 5 sind verschwenkbar um einen festen Aufnahmebolzen 6 angeordnet.

Die beiden Schwenkhebel 3, 4 des Doppelhebels 5 tragen, wie bereits oben erwähnt, mit ihren an einer Seite des Aufnahmebolzens 6 angeordneten Abschnitten die Formenhalter 1, 2, wohingegen sie mit ihren an der anderen Seite des Aufnahmebolzens 6 sich erstreckenden Abschnitten verschwenkbar an die Enden zweier Arme 7, 8 eines Doppelkniehebels 9 angelenkt sind. Die formenhalterfernen Abschnitte der Schwenkhebel 3, 4 kreuzen einander, so daß eine Aufeinanderzubewegung der Enden dieser Abschnitte zu einem Schließen der Formen und eine Voneinanderwegbewegung dieser Abschnitte zu einem Öffnen der Formen führt.

In den schwenkhebelfernen Endabschnitten der beiden Arme 7, 8 des Doppelkniehebels 9 sind Lagerbohrungen 10, 11 ausgebildet, die von einer Stellstange 12 durchragt werden, an der sie zu dieser verschwenkbar und zueinander bewegbar gelagert sind.

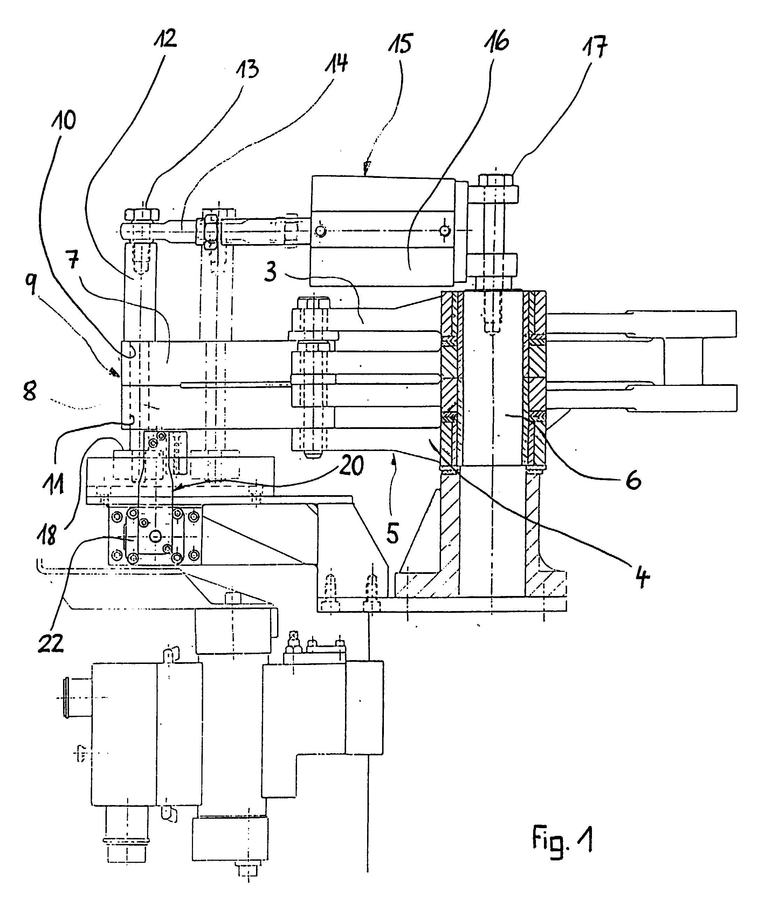

Die Stellstange 12 ist an ihrem in Figur 1 oberen Ende mittels einer Schraubverbindung 13 mit dem distalen Ende einer Kolbenstange 14 einer Zylinder-Kolben-Einheit 15 verbunden. Die Achse der Stellstange 12 ist parallel zur Achse des Aufnahmebolzens 6 angeordnet, wohingegen die Achse der Kolbenstange 14 zu den beiden Achsen des Aufnahmebolzens 6 und der Stellstange 12 senkrecht angeordnet ist. Ein Zylinder 16 der Zylinder-Kolben-Einheit 15 ist mittels einer weiteren Schraubverbindung 17 fest mit dem in Figur 1 oberen Endabschnitt bzw. Ende des Aufnahmebolzens 6 verbunden.

An ihrem kolbenstangenfernen Ende weist die Stellstange 12 eine Rolle 18 auf, die in Form einer Kulissenführung in einer fest an der IS-Maschine angeordneten Gleitbahn 19 aufgenommen ist. Die Längsachse der maschinenfesten Gleitbahn 19 erstreckt sich geradlinig parallel zum Kolbenhub, so daß ein seitliches Ausweichen der Rolle 18 und damit der Stellstange 12 verhindert wird.

Seitlich der Gleitbahn 19 ist eine Blockiereinrichtung 20 vorgesehen, mittels der die Rolle 18 innerhalb der Gleitbahn 19 verriegelbar ist, und zwar in demjenigen Endabschnitt der Gleitbahn 19, in den die Rolle 18 dann gerät, wenn sich die Stellstange 12 in ihrer am weitesten vom Aufnahmebolzen 6 entfernten Position befindet, d.h., wenn die Formenhalter 1, 2 so angeordnet sind, daß sie die Formen der Station der IS-Maschine schließen.

Zum Verriegeln der Rolle 18 in dem betreffenden Endabschnitt der Gleitbahn 19 weist die Blockiereinrichtung 20 einen Keil 21 auf, der aus einer die Gleitbahn 19 sperrenden Verriegelungsstellung in eine aus der Gleitbahn 19 zurückgezogene Stellung bewegbar ist. Zur Bewegung des Keils 21 ist eine zweite Zylinder-Kolben-Einheit 22 vorgesehen, deren Kolbenhub senkrecht zur Längserstreckung der Gleitbahn 19 erfolgt.

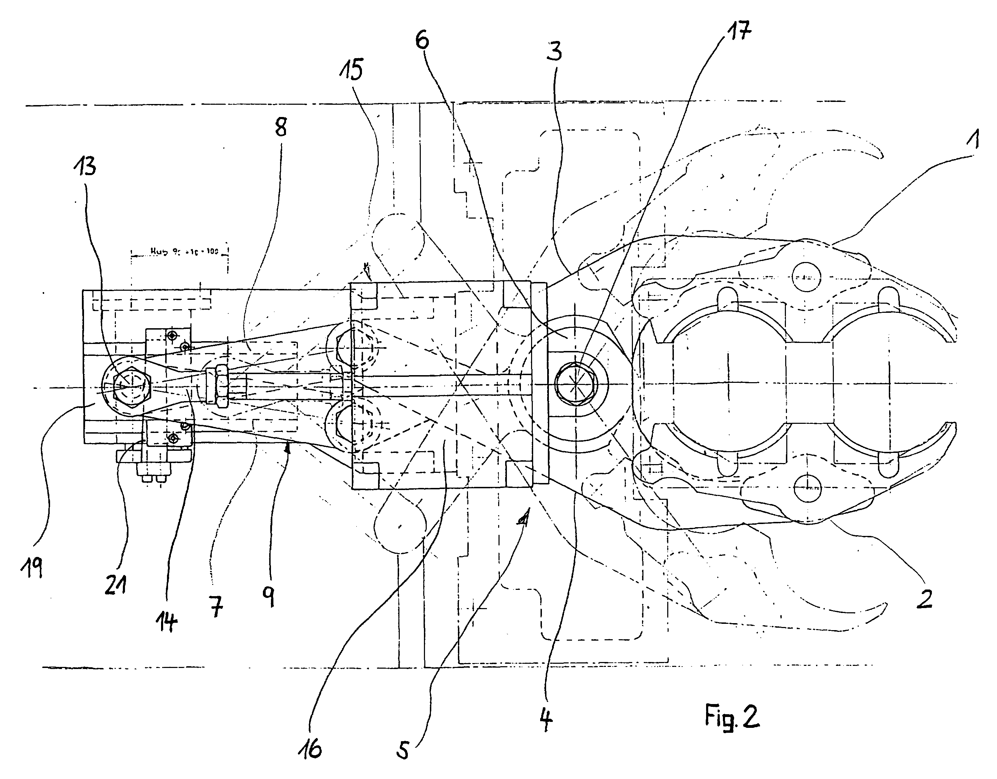

Zum Schließen der Formen mittels der vorstehend erläuterten Betätigungseinrichtung erfolgt eine Beaufschlagung der Zylinder-Kolben-Einheit 15 bzw. deren Zylinders 16, so daß die Kolbenstange 14 aus der in den Figuren 1 und 2 strichpunktiert dargestellten, aufnahmebolzennahen Stellung in die in den Figuren 1 und 2 mittels durchgezogener Linien dargestellte aufnahmebolzenferne Position versetzt wird. Dabei wandert die Stellstange 12 mit der an ihrem kolbenstangenfernen Ende angeordneten Rolle 18 zwangsläufig auch in ihre aufnahmebolzenferne Endstellung, in der sich die Rolle 18 im entsprechenden Endabschnitt der maschinenfesten Gleitbahn 19 befindet.

Bei der Bewegung der Stellstange 12 aus ihrer aufnahmebolzennahen in ihre aufnahmebolzenferne Position werden die beiden Arme 7, 8 des Doppelkniehebels 9 aus der in Figur 2 strichpunktiert dargestellten Position in die in Figur 2 mit durchgezogenen Linien dargestellte Position verschwenkt, da sich ihr Schwenkgelenk mit der Stellstange 12 vom Aufnahmebolzen 6 weg bewegt.

Durch die Schwenkbewegung der beiden Arme 7, 8 des Doppelkniehebels 9 werden die beiden Schwenkhebel 3, 4 des Doppelhebels 5 aus der in Figur 2 strichpunktiert dargestellten Position um den Aufnahmebolzen 6 in die in Figur 2 gestrichelt bzw. mit durchgezogenen Linien dargestellte Position verschwenkt, in der die Formenhalter 1, 2 aneinander angenähert und damit die Formen der betreffenden Station der IS-Maschine geschlossen sind.

Zur Verriegelung der Betätigungseinrichtung in ihrer die Formen schließenden Position wird nunmehr der Keil 21 mittels Beaufschlagung der zweiten Zylinder-Kolben-Einheit 22 aus seiner aus der Gleitbahn 19 zurückgezogenen Stellung in seine die Gleitbahn kreuzende und damit die Rolle 18 am kolbenstangenfernen Ende der Stellstange 12 verriegelnde Blockierstellung gebracht. Die Übertragung von an den Formen auftretenden Kräften auf die Zylinder-Kolben-Einheit 15 wird somit weitestgehend bzw. vollständig reduziert.

## Patentansprüche

1. Betätigungseinrichtung für das Öffnen und Schließen von Formen, insbesondere von Vorformen, einer IS-Maschine, mit einem zwei Schwenkhebel (3, 4) aufweisenden Doppelhebel (5), an dem Formenhalter (1, 2) der IS-Maschine angeordnet sind, einem Aufnahmebolzen (6), um den herum die Schwenkhebel (3, 4) des Doppelhebels (5) zum Öffnen und Schließen der Formen schwenkbar sind, und einer Zylinder-Kolben-Einheit (15), mittels deren Kolbenhub die Schwenkhebel (3, 4) des Doppelhebels (5) bewegbar sind, dadurch gekennzeichnet, daß die Zylinder-Kolben-Einheit (15) einerseits fest am Aufnahmebolzen (6) angebracht und andererseits mittels einer Stellstange (12) und eines Doppelkniehebels (9) unmittelbar mit den Schwenkhebeln (3, 4) des Doppelhebels (5) verbunden ist.

2. Betätigungseinrichtung nach Anspruch 1, bei der die Zylinder-Kolben-Einheit (15) mit ihrem Zylinder (16) fest am Aufnahmebolzen (6) angebracht ist.

3. Betätigungseinrichtung nach Anspruch 1 oder 2, bei der die Zylinder-Kolben-Einheit (15) am freien Ende ihrer Kolbenstange (14) mit dem einen Ende der Stellstange (12) verbunden ist.

4. Betätigungseinrichtung nach einem der Ansprüche 1 bis 3, bei der die Zylinder-Kolben-Einheit (15) am oberen Ende des Aufnahmebolzens (6) angeordnet ist.

5. Betätigungseinrichtung nach einem der Ansprüche 1 bis 4, bei der die Stellstange (12) an ihrem zylinder-kolben-einheits-fernen Ende eine Rolle (18) aufweist, die in einer maschinenseitigen Gleitbahn (19) in Richtung des Kolbenhubs der Zylinder-Kolben-Einheit (15) geradlinig geführt ist.

6. Betätigungseinrichtung nach einem der Ansprüche 1 bis 5, bei der die Stellstange (12) Lagerbohrungen (10, 11) in stellstangenseitigen Endabschnitten der beiden in Vertikalrichtung übereinander angeordneten Arme (7, 8) des Doppelkniehebels (9) durchragt.

7. Betätigungseinrichtung nach einem der Ansprüche 1 bis 6, bei der die stellstangenfernen Enden der beiden Arme (7, 8) des Doppelkniehebels (9) verschwenkbar mit den formhalterfernen Enden der beiden Schwenkhebel (3, 4) des Doppelhebels (5) verbunden sind.

8. Betätigungseinrichtung nach einem der Ansprüche 1 bis 7, bei der die Stellstange (12) mittels einer Blockiereinrichtung (20) in ihrer dem der geschlossenen Stellung der Formen zugeordneten Todpunkt des Kolbenhubs entsprechenden Endstellung verriegelbar ist.

9. Betätigungseinrichtung nach Anspruch 8, bei der die Blockiereinrichtung (20) einen Keil (21) aufweist, der zwischen einer in die maschinenseitige Gleitbahn (19) vorstehenden und einer aus der maschinenseitigen Gleitbahn (19) zurückgezogenen Position verstellbar ist.

10. Betätigungseinrichtung nach Anspruch 9, bei der zur Verstellung des Keils (21) eine zweite Zylinder-Kolben-Einheit (22) vorgesehen ist.

## Claims

1. Actuation device for the opening and closing of moulds, in particular of blank moulds, of an IS machine, having a double lever (5) which has two pivoting levers (3, 4) and on which mould retainers (1, 2) of the IS machine are arranged, having a locating bolt (6), about which the pivoting levers (3, 4) of the double lever (5) are pivotable in order to open and close the moulds, and having a cylinder-piston unit (15), by means of whose piston stroke the pivoting levers (3, 4) of the double lever (5) are movable, characterised in that the cylinder-piston unit (15) is, on the one hand, fitted securely to the locating bolt (6) and, on the other hand, connected directly to the pivoting levers (3, 4) of the double lever (5) by means of a control rod (12) and a U-bend lever (9).

2. Actuation device according to claim 1, in which the cylinder-piston unit (15), with its cylinder (16), is fitted securely to the locating bolt (6).

3. Actuation device according to claim 1 or 2, in which the cylinder-piston unit (15) is connected, at the free end of its piston rod (14), to the first end of the control rod (12).

4. Actuation device according to any one of claims 1 to 3, in which the cylinder-piston unit (15) is arranged at the upper end of the locating bolt (6).

5. Actuation device according to any one of claims 1 to 4, in which the control rod (12) has, at its end remote from the cylinder-piston unit, a roller (18) which is guided in a linear manner in a slide way (19), which is arranged on the machine side, in the direction of the piston stroke of the cylinder-piston unit (15).

6. Actuation device according to any one of claims 1 to 5, in which the control rod (12) passes through drilled bearing holes (10, 11) in end portions, arranged on the control rod side, of the two arms (7, 8), which are arranged above one another in a vertical direction, of the U-bend lever (9).

7. Actuation device according to any one of claims 1 to 6, in which the ends, that are remote from the control rod, of the two arms (7, 8) of the U-bend lever (9) are connected in a pivotable manner to the ends, that are remote from the mould retainer, of the two pivoting levers (3, 4) of the double lever (5).

8. Actuation device according to any one of claims 1 to 7, in which the control rod (12) is lockable by means of a locking device (20) in its end position which corresponds to the dead point, associated with the closed position of the moulds, of the piston stroke.

9. Actuation device according to claim 8, in which the locking device (20) has a block (21) which is adjustable between a position projecting into the slide way (19) arranged on the machine side and a position withdrawn from the slide way (19) arranged on the machine side.

10. Actuation device according to claim 9, in which a second cylinder-piston unit (22) is provided for the adjustment of the block (21).

## Revendications

1. Dispositif d'actionnement pour l'ouverture et la fermeture de moules, en particulier de moules ébaucheurs, d'une machine IS, comprenant un levier double (5) avec deux leviers pivotants (3, 4) sur lequel sont disposés des porte-moules (1, 2) de la machine IS, un axe de montage (6) autour duquel les leviers pivotants (3, 4) du levier double (54) peuvent pivoter à des fins d'ouverture et de fermeture des moules et un ensemble piston-cylindre (15) par la course de piston duquel les leviers pivotants (3, 4) du levier double (5) peuvent être déplacés, caractérisé par le fait que l'ensemble piston-cylindre (15) d'un côté est monté fixe sur l'axe de montage (6) et de l'autre est relié directement aux leviers pivotants (3, 4) du levier double (5) au moyen d'une tige de commande (12) et d'un levier à genouillère double (9).

2. Dispositif d'actionnement selon la revendication 1, dans lequel l'ensemble piston-cylindre (15) est fixé à l'axe de montage (6) par son cylindre (16).

3. Dispositif d'actionnement selon la revendication 1 ou 2, dans lequel l'ensemble piston-cylindre (15), à l'extrémité libre de sa tige de piston (14), est relié à l'une des extrémités de la tige de commande (12).

4. Dispositif d'actionnement selon une des revendications 1 à 3, dans lequel l'ensemble piston-cylindre (15) est disposé à l'extrémité supérieure de l'axe (6).

5. Dispositif d'actionnement selon une des revendications 1 à 4, dans lequel la tige de commande (12), à son extrémité éloignée de l'ensemble piston-cylindre, comporte un galet (18) qui est guidé de manière rectiligne dans une glissière (19) côté machine dans la direction de la course de déplacement du piston de l'ensemble piston-cylindre (15).

6. Dispositif d'actionnement selon une des revendications 1 à 5, dans lequel la tige de commande (12) s'engage dans des alésages de palier (10, 11) dans des tronçons d'extrémité côté tige de commande, disposés l'un au dessus de l'autre dans la direction verticale, des deux bras (7, 8) du levier à genouillère double (9).

7. Dispositif d'actionnement selon une des revendications 1 à 6, dans lequel les extrémités des deux bras (7, 8) du levier à genouillère double (9) éloignées de la tige de commande (12) sont liées de manière pivotante aux extrémités des deux leviers pivotants (3, 4) du levier double (5) éloignées des porte-moules.

8. Dispositif d'actionnement selon une des revendications 1 à 7, dans lequel la tige de commande (12) peut être verrouillée au moyen d'un dispositif de blocage (20) dans sa position extrême correspondant au point mort de la course du piston associé à la position fermée des moules.

9. Dispositif d'actionnement selon la revendication 8, dans lequel le dispositif de blocage (20) comporte une cale (21) qui peut être déplacée entre une position avancée dans la glissière (19) côté machine et une position rentrée par rapport à la glissière (19) côté machine.

10. Dispositif d'actionnement selon la revendication 9, dans lequel un deuxième ensemble piston-cylindre (22) est prévu pour le déplacement de la cale (21).
